# EUROPÄISCHE PATENTSCHRIFT

(11) **EP 1 201 950 B1**
(45) Veröffentlichungstag und Bekanntmachung des Hinweises auf die Patenterteilung: **26.12.2007**
(21) Anmeldenummer: 00123103.4
(22) Anmeldetag: 25.10.2000
(51) Int. Cl.: F16D 3/84, F16J 3/04, F16D 3/20

(54) **Achsmanschette**
Boot for universal joint
Soufflet pour joint universel

(43) Veröffentlichungstag der Anmeldung: 02.05.2002
(73) Patentinhaber: Ford Global Technologies, LLC, Dearborn, MI 48126 (US)
(72) Erfinder: Mohr, Christian, 54290 Trier (DE); Odermatt, Manfred, 53773 Hennef/Sieg (DE)
(74) Vertreter: Dörfler, Thomas

(56) Entgegenhaltungen:
- FR-A- 1 514 981
- FR-A- 2 754 024
- US-A- 2 510 362
- PATENT ABSTRACTS OF JAPAN vol. 1998, no. 10, 31. August 1998 (1998-08-31) & JP 10 122366 A (TOYO TIRE &RUBBER CO LTD), 15. Mai 1998 (1998-05-15)
- PATENT ABSTRACTS OF JAPAN vol. 1999, no. 09, 30. Juli 1999 (1999-07-30) & JP 11 094083 A (KEEPER CO LTD;NIPPON UNICAR CO LTD), 9. April 1999 (1999-04-09)

## Beschreibung

Die Erfindung betrifft eine Achsmanschette zur Abdichtung des Überganges zwischen einer Antriebswelle und einem Gleichlaufgelenk, gemäß dem Oberbegriff von Anspruch 1. Eine derartige Achsmanschette ist aus der US-A-2 510 362 und aus der FR-A-1 514 981 bekannt.

In einem Kraftfahrzeug übertragen Gelenkwellen die Antriebsleistung des Motors zu den Achsen und von dort zu den Rädern. Innerhalb dieser Gelenkwellen sind dabei verschiedene Gleichlaufgelenke angeordnet, welche eine Winkelverstellung und gegebenenfalls auch eine axiale Verschiebung zwischen den Drehachsen der einlaufenden und auslaufenden Welle ermöglichen. Derartige Gleichlaufgelenke sind unter anderem in der Nähe der Räder angeordnet und daher Störeinflüssen und Belastungen durch die Umgebung ausgesetzt, insbesondere einem Angriff durch Steinschlag. Ferner muss in den Gleichlaufgelenken eine gute Schmierung der gegeneinander beweglichen Elemente gewährleistet sein.

Der Übergang zwischen einem Gleichlaufgelenk und einer Antriebswelle wird daher in der Regel von einer flexiblen Achsmanschette aus Gummi oder einem ähnlichen elastischen Material umgeben, um diesen zu schützen und um durch eine Abdichtung den Austritt von Schmierfett zu verhindern. Eine aus der US 4 392 838 bekannte Achsmanschette ist mit ihrem zweiten Ende mittels eines Klemmrings an der Antriebswelle befestigt, während das erste Ende an dem Gleichlaufgelenk größeren Durchmessers befestigt ist. Die aus einem flexiblen Material - wie zum Beispiel Gummi - hergestellte Achsmanschette verläuft vom ersten Ende zunächst in Richtung des Gleichlaufgelenks und biegt dann zurück in die Richtung der Antriebswelle, wo sie mit ihrem zweiten Ende befestigt ist. Zwischen ihren beiden Enden hat die Achsmanschette somit eine einzige, konzentrisch um die Antriebswelle umlaufende Faltung, welche nach innen in Richtung Gleichlaufgelenk gerichtet ist. In axialer Richtung weist die Achsmanschette eine erhebliche Ausdehnung auf, da das Falten der Manschette in erster Linie in axialer Richtung erfolgt. Durch die erhebliche axiale Baulänge und die Formgebung weist die Achsmanschette auf der dem Gleichlaufgelenk und der Antriebswelle zugewandten Innenseite ein großes freies Volumen auf, in welchem sich im Laufe des Betriebs des Gleichlaufgelenks Schmierfett aus dem Gelenk ansammeln kann. Dieses Schmierfett geht damit für die eigentlich beabsichtigte Schmierung der aneinander reibenden Teile des Gelenkes verloren, was einen schnelleren Verschleiß der Baugruppe zur Folge hat.

Eine vergleichbare Achsmanschette ist aus der US 4 369 979 bekannt. Die dort offenbarte Achsmanschette ist an einer auf der Antriebswelle axial verschiebebeweglichen Hülse befestigt, im Übrigen jedoch ähnlich wie die aus der US 4 392 838 bekannte Achsmanschette konstruiert. Auch diese Achsmanschette wird somit vornehmlich in axialer Richtung gefaltet, und weist daher ein großes zum Innenraum gerichtetes Leervolumen auf, in welchem sich unerwünschtes Schmierfett ansammeln kann.

Wie erwähnt, bestehen Achsmanschetten nach dem Stand der Technik aus Gummi oder einem ähnlichen massiven elastischen Material, das ein nicht unerhebliches Gewicht aufweist und mechanische Beschädigungen wie z.B. Schnitte oder Risse meist nicht unbeschadet übersteht.

Der in Anspruch 1 angegebenen Erfindung liegt die Aufgabe zu Grunde, eine Achsmanschette zur Abdichtung des Überganges zwischen Antriebswelle und Gelenk bereitzustellen, die geringes Gewicht hat und gegen mechanische Beschädigungen unempfindlich ist.

Der Polyurethanschaum, aus dem die Achsmanschette erfindungemäß im Wesentlichen besteht, hat den Vorteil, dass dieser bei geringem Gewicht kompressibel ist und eine ausreichende Elastizität aufweist. Ferner kann er viele mechanische Beschädigungen wie z.B. Schnitte oder Risse ohne Beeinträchtigung seiner Funktion überstehen, da er sich quasi von selbst wieder verschließt.

Aus den PATENT ABSTRACTS OF JAPAN zu der JP 10 122366 A ist eine Achsmanschette bekannt, die in einem von mehreren Materialbeispielen im Wesentlichen aus Polyurethan besteht. Irgendwelche Schaumeigenschaften des Polyurethans sind nicht offenbart.

Aus den PATENT ABSTRACTS OF JAPAN zu der JP 11 094083 A ist eine Achsmanschette bekannt, die hohe Gasdurchlässigkeit aufweist. Eine Abdichtwirkung gegen Austritt von Schmierfett ist nicht offenbart.

Vorteilhafte Ausgestaltungen der Erfindung, die in kostengünstiger Weise eine zuverlässige und funktionell verbesserte Abdichtung gewährleisten, sind in den Unteransprüchen angegeben.

Die erfindungsgemäße Achsmanschette dient vornehmlich der Abdichtung des Überganges zwischen einer Antriebswelle und einem Gelenk, insbesondere einem Gleichlaufgelenk, in einem Kraftfahrzeug, wobei sie jedoch auch für andere, ähnlich gelagerte Anwendungen geeignet ist.

Das Gelenk weist dabei einen größeren Durchmesser als die Antriebswelle auf, und die Achsmanschette ist mit ihrem ersten Ende an dem Gelenk und mit ihrem zweiten Ende an der Antriebswelle befestigt. In diesem Fall weist die Achsmanschette vorzugsweise mindestens eine konzentrisch um die Antriebswelle umlaufende und vorzugsweise von dem Gelenk weg gerichtete Faltung auf, wobei das zweite Ende der Achsmanschette näherungsweise im Bereich der axialen Erstreckung der Faltung befestigt ist.

Durch die beschriebene Konstruktion der Achsmanschette kann eine verbesserte Abdichtung des Überganges zwischen der Antriebswelle und dem Gelenk erreicht werden. Aufgrund ihrer Formgebung weist die Achsmanschette nur eine minimale axiale Erstreckung auf. Das für die Beweglichkeit der Manschette notwendige Materialreservoir wird in erster Linie in einer oder mehreren Falten gespeichert, wobei diese Falten anders als beim Stand der Technik nicht in axialer Richtung nebeneinander angeordnet sind, sondern in radialer Richtung. Dabei wird ausgenutzt, dass das Gelenk einen größeren Durchmesser als die Antriebswelle aufweist, so dass der zu überwindende Durchmesserunterschied für die Unterbringung der Falten genutzt werden kann.

Die radiale Aneinanderreihung von konzentrisch um die Antriebswelle umlaufenden Falten wirkt sich ferner positiv auf die Schmiereigenschaften insbesondere eines Gleichlaufgelenks aus. Zum einen ist das zum Gleichlaufgelenk liegende und von der Achsmanschette eingeschlossene Leervolumen aufgrund der kurzen axialen Baulänge der Achsmanschette erheblich geringer als bei den aus dem Stand der Technik bekannten Achsmanschetten, so dass weniger Leervolumen für die Aufnahme von Schmiermitteln vorhanden ist. Zum anderen bewirkt die Form der Faltungen, dass bei einer Bewegung der Antriebswelle eventuell in den Faltungen befindliches Schmiermittel zum Gleichlaufgelenk aus den Faltungen herausgedrückt wird, wodurch es für die Erfüllung seiner eigentlichen Funktion wieder zur Verfügung steht.

Die erfindungsgemäße Achsmanschette eignet sich aufgrund der faltenbalgartigen Konstruktion auch für Gelenke, die einen axialen Freiheitsgrad aufweisen.

Die axiale Erstreckung des gefalteten Abschnittes der erfindungsgemäßen Achsmanschette beträgt vorzugsweise 50% bis 150%, besonders bevorzugt 60% bis 80% des Durchmessers der Antriebswelle. Als Durchmesser der Antriebswelle wird dabei der Durchmesser an derjenigen Stelle der Antriebswelle zugrunde gelegt, an welcher die Achsmanschette mit ihrem zweiten Ende befestigt ist. Mit der erfindungsgemäß konstruierten Achsmanschette kann somit eine sehr kurze axiale Baulänge erzielt werden.

Gemäß einer Weiterbildung der Erfindung ist an mindestens einem Ende der Achsmanschette ein Klemmelement angeordnet, welches insbesondere ringförmig oder hülsenförmig sein kann und mit welchem ein radial nach innen gerichteter Anpressdruck zur Befestigung der Achsmanschette auf der Antriebswelle oder dem Gleichlaufgelenk erzeugt werden kann. Das Klemmelement ist aus einem geeigneten elastischen Material wie insbesondere einem Metall hergestellt. Vorzugsweise wird das Klemmelement in das flexible Material der Achsmanschette integriert. Durch das Klemmelement lässt sich ein erheblich geringerer Montageaufwand für die Achsmanschette erzielen als bei den aus dem Stand der Technik bekannten Systemen. Die Dimensionierung des Klemmelementes ist so gewählt, dass der Durchmesser der Achsmanschette im Bereich des Klemmelementes wesentlich kleiner ist als der Durchmesser an der Kontaktstelle der Welle beziehungsweise des Gleichlaufgelenks, wo das Klemmelement aufsitzen soll. Vor der Montage der Achsmanschette wird die Öffnung des Klemmelementes entsprechend aufgeweitet, und die Achsmanschette wird an die gewünschte Position auf der Antriebswelle oder dem Gleichlaufgelenk gesetzt. Wenn sie die gewünschte Position erreicht hat, wird die verwendete Montagehilfseinrichtung (z.B. ein Werkzeug nach dem Prinzip eines Schuhlöffels) entfernt beziehungsweise herausgezogen. Das Klemmelement nimmt daraufhin seine ursprüngliche engere Form an und presst hierdurch die Achsmanschette auf ihrem Träger fest. Die Achsmanschette dichtet hierdurch vollständig und dauerhaft sicher ab und ist gegen Verrutschen gesichert. Ein weiterer Vorteil ist die größere Gleichmäßigkeit der Befestigung im Vergleich zu bekannten Befestigungsarten, bei denen eine Art Schlauchschelle oder ein Kabelbinder die Achsmanschette auf ihrem Untergrund festklemmt. Bei den zuletzt genannten Befestigungsarten kommt es immer wieder zu Quetschungen im Bereich der Schraube beziehungsweise der Aufrolleinrichtung, durch die die darunter gelegene Achsmanschette beschädigt wird.

Die Achsmanschette kann radial nach außen hin in ihrer Wandstärke dünner werden, wodurch die Kräfteverteilung im balgförmigen Abschnitt der Achsmanschette optimiert wird.

Gemäß einer Ausgestaltung der Erfindung wird eine Achsmanschette zur Abdichtung des Überganges zwischen einer Antriebswelle und einem Gleichlaufgelenk bereit gestellt, die im Wesentlichen aus einem Polyurethanschaum besteht. Ein Polyurethanschaum hat den Vorteil, dass dieser bei geringem Gewicht kompressibel ist und eine ausreichende Elastizität aufweist. Ferner kann er viele mechanische Beschädigungen wie z.B. Schnitte oder Risse ohne Beeinträchtigung seiner Funktion überstehen, da er sich quasi von selbst wieder verschließt. Diese positiven Eigenschaften des Polyurethanschaums lassen dessen Einsatz auch bei Achsmanschetten zur Abdichtung des Übergangs zwischen einer Antriebswelle und einem Gleichlaufgelenk als besonders vorteilhaft erscheinen, die nicht entsprechend den Merkmalen der Ansprüche 1 bis 6 ausgebildet sind.

Im einer bevorzugten Ausführungsform der Erfindung kann weiterhin vorgesehen sein, dass im Bereich des größten Durchmessers der Achsmanschette ein umlaufender Kragen ausgebildet ist, der den axialen Bereich der Faltung wenigstens teilweise überdeckt. Ein derartiger umlaufender Kragen stellt einen zusätzlichen Steinschlagschutz dar und verhindert, dass Steine oder sonstige Fremdkörper in den Bereich der Faltung gelangen und diese beschädigen oder sich dort festsetzen. Abhängig von den Eigenschaften des für die Achsmanschette verwendeten Materials kann jedoch auf den zusätzlichen umlaufenden Kragen auch verzichtet werden.

Im Folgenden wird die Erfindung mit Hilfe der Figuren beispielhaft erläutert. Es zeigen:
- Fig. 1: eine erfindungsgemäße Achsmanschette am Übergang von einer Antriebswelle zu einem Gleichlaufgelenk;
- Fig. 2: eine mögliche Winkelstellung zwischen Antriebswelle und Gleichlaufgelenk und
- Fig. 3: eine erfindungsgemäße Achsmanschette ähnlich der in Fig. 1 dargestellten, jedoch ohne zusätzlichen Schutzkragen.

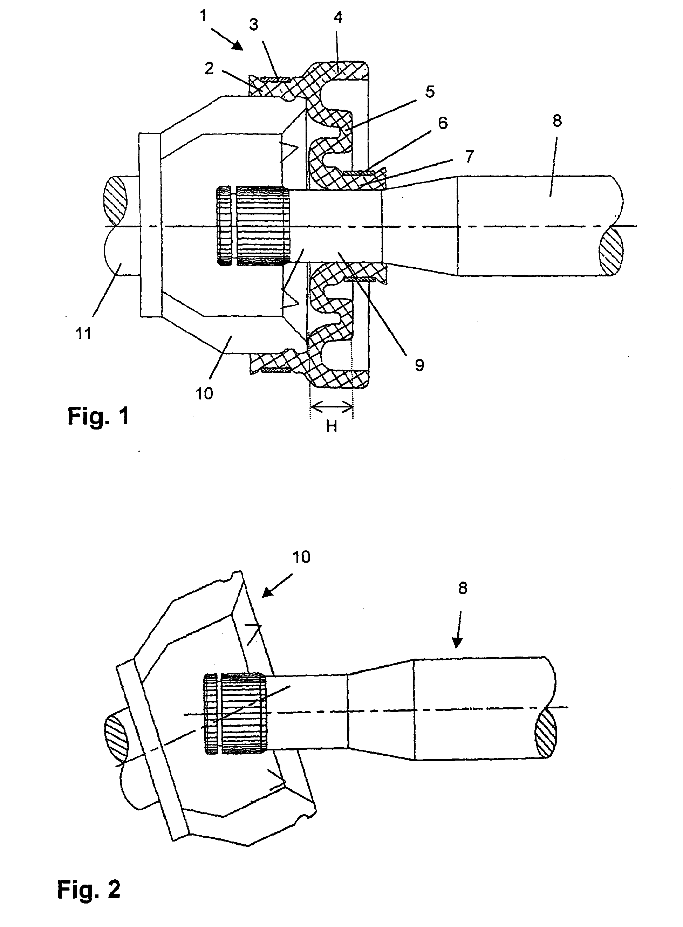

Figur 1 zeigt in einer Seitenansicht ein Gleichlaufgelenk 10, welches die Verbindung zwischen einer eingehenden Welle 11 und einer ausgehenden Antriebswelle 8 herstellt. Das Gleichlaufgelenk 10 koppelt die beiden Wellen 8, 11 in bekannter und vorliegend nicht näher dargestellter Weise derart, dass zwischen den Achsen dieser beiden Wellen eine Winkelverstellung auftreten kann, ohne dass hierdurch die Übertragung der Drehbewegung beeinträchtigt oder unterbrochen würde. Eine beispielhafte Winkelverstellung von ca. 20° zwischen den Achsen ist in Figur 2 erkennbar.

In Figur 1 ist ferner im Querschnitt eine erfindungsgemäße Achsmanschette 1 dargestellt, welche den Übergang vom Gleichlaufgelenk 10 zur Antriebswelle 8 abdichtet und schützt. Die vorzugsweise aus Polyurethanschaum bestehende Achsmanschette 1 ist mit ihrem ersten Ende 2 am äußeren Umfang des Gehäuses des Gleichlaufgelenks 10 befestigt. Mit ihrem zweiten Ende 7 ist sie auf der Antriebswelle 8 befestigt. Dieses zweite Ende 7 sitzt dabei auf einem Abschnitt 9 der Antriebswelle 8, dessen Radius kleiner ist als der der restlichen Antriebswelle.

Die Form der Achsmanschette 1 kann im Wesentlichen wie folgt beschrieben werden: Die radiale Außenseite der Achsmanschette 1 wird durch einen hülsenförmigen Teil gebildet, welcher das genannte erste Ende 2 sowie einen vom Gleichlaufgelenk 10 weg axial abstehenden Kragen 4 aufweist. Der radial innen gelegene Abschnitt der Achsmanschette 1 ist ebenfalls hülsenförmig und wird durch das zweite Ende 7 der Achsmanschette gebildet. Zwischen der radial inneren Hülse 7 und der radial äußeren Hülse 2, 4 der Achsmanschette, die axial in Richtung der Antriebswelle 8 (in der Figur rechts) etwa bündig abschließen, besteht eine durchgehende Materialverbindung unter Ausbildung einer Faltung 5. Die Faltung 5 ist axial vom Gleichlaufgelenk 10 weg (in der Figur nach rechts) gerichtet und läuft konzentrisch um die Antriebswelle 8 um. Die Faltung 5 liegt vollständig in dem Ringvolumen, welches zwischen der inneren Hülse 7 und der äußeren Hülse 4 der Achsmanschette definiert wird.

Durch die geschilderte Formgebung der Achsmanschette wird erreicht, dass diese eine sehr kurze axiale Baulänge aufweist und daher sehr platzsparend ist. Weiterhin wird durch die radiale Unterbringung der Faltung 5 und deren minimale axiale Erstreckung erreicht, dass das auf der Innenseite der Achsmanschette 1 liegende Volumen sehr klein ist, so dass sich dort nur sehr wenig Schmierfett aus dem Gleichlaufgelenk 10 ansammeln kann. Darüber hinaus wird bei einer Schwenkbewegung der Antriebswelle 8 eventuell in der Faltung 5 oder sonstigen Zwischenräumen vorhandenes Schmierfett aus diesen Räumen herausgedrückt und dem Gleichlaufgelenk wieder zugeführt. Dort kann es seine eigentliche Funktion erfüllen und zum Beispiel Kugellager schmieren. Bei der erfindungsgemäßen Achsmanschette ist somit sowohl der Schmiermittelbedarf geringer als auch die Ausnutzung des enthaltenen Schmiermittels größer.

Weiterhin weist die erfindungsgemäße Achsmanschette durch ihre kompakte Bauweise und die Abstützung auf dem Gleichlaufgelenk beziehungsweise der Antriebswelle eine höhere Stabilität auf. Hierdurch kann insbesondere ein besserer Schutz vor Belastungen wie zum Beispiel einem Steinschlag stattfinden. Der Steinschlagschutz wird durch den äußeren Kragen 4 der Achsmanschette zusätzlich verbessert.

Die Befestigung der Achsmanschette an dem Gehäuse des Gleichlaufgelenks 10 beziehungsweise an der Antriebswelle 8 erfolgt über hülsenförmige Klemmelemente 3 und 6. Derartige Klemmelemente erzeugen einen radial nach innen gerichteten Anpressdruck, mit welchem die Achsmanschette auf ihren Untergrund gedrückt wird. Die Klemmelemente 3, 6 können am Rand abgerundet sein, um weniger in das Material der Achsmanschette einzuschneiden. Vorzugsweise bestehen diese Klemmelemente aus einem wenig dehnbaren Material wie etwa einem Metall. Sie können in das Material der Achsmanschette angegossen oder darin eingegossen sein. Die Montage der Achsmanschette erfordert daher keine separaten Befestigungsmittel wie zum Beispiel Schlauchschellen oder dergleichen, und es wird eine über den Umfang verteilt vollständig gleichmäßige Befestigung erzielt.

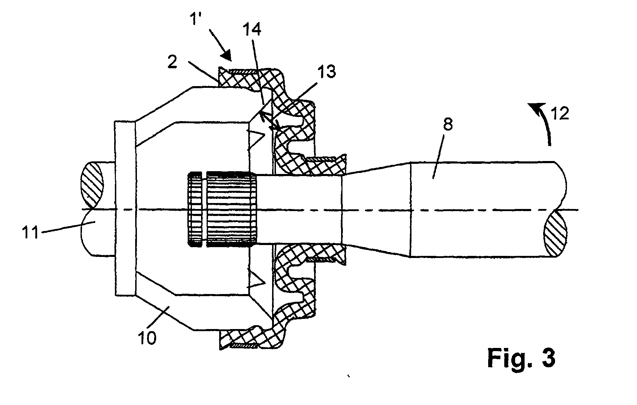

In Fig. 3 ist eine Achsmanschette 1' ähnlich Fig. 1 dargestellt, wobei jedoch kein Schutzkragen vorhanden ist.

Ein Vorteil der erfindungsgemäßen Achsmanschette 1 besteht darin, dass diese eine Schutz des Gelenkes 10 bei extremen Auslenkungen bewirkt. In der Werkstatt wird z.B. bei dem Ausbau des Fahrzeuggetriebes wie folgt verfahren: Die untere Führung der Federbeine wird entfernt, wobei die Gelenkwellen mit der Radnabe am Federbein verbunden bleiben. Dann wird die gesamte Einheit nach außen bewegt, so dass die inneren Gelenke aus dem Getriebe herausgezogen werden. Die äußeren Gelenke können dabei maximal ausgelenkt werden, wenn sie z.B. herunterhängen, wie in Fig. 3 durch den Pfeil 12 angedeutet. Dabei können durch die Hebelwirkung große Kräfte entstehen, die zur Beschädigung des Gleichlaufgelenks 10 führen können. Der erfindungsgemäße Balg setzt bei derartigen Auslenkungen in etwa an der mit dem Pfeil 13 markierten Stelle auf der konischen Fläche 14 (Tulpe) des Gleichlaufgelenkes 10 auf und verhindert so als Abstandshalter extreme Auslenkungen und Beschädigungen der Gleichlaufgelenks. Durch die Elastizität des Achsmanschettenmaterials wird weiterhin der Anschlag der Gelenkwelle an der Fläche 14 in dem vorstehend beschriebenen Fall gedämpft.

Die Achsmanschette 1 besteht vorzugsweise aus einem Polyurethanschaum. Dieses Material ist sehr kompressibel und anders als die aus dem Stand der Technik bekannten Materialien kein konsistentes Elastomer. Die Materialwahl führt unter anderem zu selbstdichtenden Eigenschaften, welche auch bei einer begrenzten äußerlichen Zerstörung keinen Verlust der Abdichteigenschaften nach sich ziehen. Selbst ein Einschnitt mit einem Messer wird von diesem Material verkraftet, ohne die Trennwirkung (Schmierfett innen, Schmutz außen) zu verlieren. Ein weiterer Vorteil dieser Materialwahl besteht darin, dass dadurch ein hervorragender Steinschlagschutz durch die Achsmanschette gewährleistet ist.

Das Achsmanschettenmaterial kann zumindest in Teilbereichen luftdurchlässig ausgebildet sein, was bei Polyurethanschaum relativ einfach realisierbar ist, so dass ein durch betriebsbedingte Erwärmung entstehender Überdruck entweichen kann.

Die erfindungsgemäße Achsmanschette 1 bietet somit zusammengefasst die folgenden Vorteile:
- Fetteinsparung;
- vereinfachte Montage durch eine geringere Anzahl von Teilen, durch Vereinfachung der Teile sowie durch Verwendung von integrierten Klemmringen;
- Gewichtseinsparung, da weniger Schmiermittel benötigt wird;
- Aufrechterhaltung der Schmiereigenschaften durch Rückführung des Fettes aus der Faltung;
- geringerer Bauraum;
- höhere Dauerhaltbarkeit;
- geringere Angriffsfläche hinsichtlich möglicher Intrusionen, Steinschlag od. dgl.;
- optimale Stapel-, Lager- und Transportmöglichkeiten, da die Achsmanschetten wie "Suppenteller" ineinander gesteckt und gelagert werden können;
- bei Verwendung von Polyurethanschaum tragen dessen Materiäleigenschaften, insbesondere die hohe Kompressibilität, zur Befestigung, Fixierung und Abdichtung der Achsmanschette bei;
- Abdichtungwirkung einer PU-Manschette bleibt auch bei Beschädigung (Riss etc.) erhalten;
- Kostenersparnis und Gewichtsersparnis durch Einsparung von Achsmanschettenmaterial durch die geringere Dichte des PU-Schaums.

## Patentansprüche

1. Achsmanschette zur Abdichtung des Überganges zwischen einer Antriebswelle und einem Gleichlaufgelenk, das einen größeren Durchmesser als die Antriebswelle aufweist, wobei die Achsmanschette (1) mit ihrem ersten Ende an dem Gelenk und mit ihrem zweiten Ende an der Antriebswelle (8) befestigt ist, wobei die Achsmanschette (1) mindestens eine konzentrisch um die Antriebswelle umlaufende Faltung (5) aufweist, und wobei das zweite Ende (7) der Achsmanschette im Bereich der axialen Erstreckung der Faltung (5) an der Antriebswelle befestigt ist,
**dadurch gekennzeichnet, dass** die Achsmanschette im Wesentlichen aus einem Polyurethanschaum besteht.

2. Achsmanschette nach Anspruch 1, **dadurch gekennzeichnet, dass** die Faltung (5) von dem Gelenk (10) weg gerichtet ist.

3. Achsmanschette nach Anspruch 1 oder 2, **dadurch gekennzeichnet, dass** die axiale Erstreckung (H) der Faltung (5) 50% bis 150%, vorzugsweise 60% bis 80% des Durchmessers der Antriebswelle (8) beträgt.

4. Achsmanschette nach einem der Ansprüche 1 bis 3, **dadurch gekennzeichnet, dass** an mindestens einem Ende (2, 7) der Achsmanschette (1) ein vorzugsweise ringförmiges oder hülsenförmiges Klemmelement (3, 6) angeordnet ist, mit welchem ein radialer Anpressdruck zur Befestigung der Achsmanschette erzeugt werden kann.

5. Achsmanschette nach Anspruch 4,**dadurch gekennzeichnet, dass** das Klemmelement (3, 6) aus Metall oder Kunststoff besteht und vorzugsweise in das Material der Achsmanschette (1) integriert ist.

6. Achsmanschette nach einem der Ansprüche 1 bis 5, **dadurch gekennzeichnet, dass** die Materialstärke der Achsmanschette radial nach außen hin abnimmt.

7. Achsmanschette nach einem der Ansprüche 1 bis 6, **dadurch gekennzeichnet, dass** diese zumindest in Teilbereichen luftdurchlässig ausgebildet ist.

8. Achsmanschette nach einem der Ansprüche 1 bis 7, **dadurch gekennzeichnet, dass** im Bereich des größten Durchmessers der Achsmanschette ein umlaufender Kragen (4) ausgebildet ist, der den axialen Bereich der Faltung (5) wenigstens teilweise überdeckt.

## Claims

1. Shaft boot for sealing off the transition between a drive shaft and a constant velocity joint, which has a larger diameter than the drive shaft, the shaft boot (1) being secured by its first end on the joint and by its second end on the drive shaft (8), wherein the shaft boot (1) has at least one fold (5), which concentrically surrounds the drive shaft, and wherein the second end (7) of the shaft boot is secured on the drive shaft in the region of the axial extent of the fold (5), **characterized in that** the shaft boot is composed essentially of a polyurethane foam.

2. Shaft boot according to Claim 1, **characterized in that** the fold (5) points away from the joint (10).

3. Shaft boot according to Claim 1 or 2, **characterized in that** the axial extent (H) of the fold (5) is 50% to 150%, preferably 60% to 80%, of the diameter of the drive shaft (8).

4. Shaft boot according to any of Claims 1 to 3, **characterized in that** a preferably ring- or sleeve-shaped clamping element (3, 6), by means of which a radial contact pressure can be produced to secure the shaft boot, is arranged at at least one end (2, 7) of the shaft boot (1).

5. Shaft boot according to Claim 4, **characterized in that** the clamping element (3, 6) is composed of metal or plastic and is preferably integrated into the material of the shaft boot (1).

6. Shaft boot according to any of Claims 1 to 5, **characterized in that** the thickness of the material of the shaft boot decreases radially toward the outside.

7. Shaft boot according to any of Claims 1 to 6, **characterized in that** said boot is of air-permeable design, at least in partial areas.

8. Shaft boot according to any of Claims 1 to 7, **characterized in that** an encircling collar (4), which at least partially covers the axial region of the fold (5), is formed in the region of the largest diameter of the shaft boot.

## Revendications

1. Soufflet pour joint universel pour assurer l'étanchéité du passage entre un arbre d'entraînement et un joint homocinétique, qui présente un plus grand diamètre que l'arbre d'entraînement, dans lequel le soufflet pour joint universel (1) est fixé par sa première extrémité au joint et par son autre extrémité à l'arbre d'entraînement (8), dans lequel le soufflet pour joint universel (1) comporte au moins un pli (5) concentrique s'étendant autour de l'arbre d'entraînement, et dans lequel la deuxième extrémité (7) du soufflet pour joint universel est fixée à l'arbre d'entraînement dans la région de l'extension axiale du pli (5), **caractérisé en ce que** le soufflet pour joint universel se compose essentiellement d'une mousse de polyuréthane.

2. Soufflet pour joint universel selon la revendication 1, **caractérisé en ce que** le pli (5) est orienté en direction opposée au joint (10).

3. Soufflet pour joint universel selon la revendication 1 ou 2, **caractérisé en ce que** l'extension axiale (H) du pli (5) vaut de 50 % à 150 %, de préférence de 60 % à 80 % du diamètre de l'arbre d'entraînement (8).

4. Soufflet pour joint universel selon l'une quelconque des revendications 1 à 3, **caractérisé en ce qu'**un élément de serrage (3, 6), de préférence en forme de bague ou de manchon, est disposé sur au moins une extrémité (2, 7) du soufflet pour joint universel (1), avec lequel on peut produire une pression d'application radiale pour la fixation du soufflet pour joint universel.

5. Soufflet pour joint universel selon la revendication 4, **caractérisé en ce que** l'élément de serrage (3, 6) se compose de métal ou de matière plastique, et est de préférence intégré dans la matière du soufflet pour joint universel (1).

6. Soufflet pour joint universel selon l'une quelconque des revendications 1 à 5, **caractérisé en ce que** l'épaisseur de la matière du soufflet pour joint universel diminue radialement vers l'extérieur.

7. Soufflet pour joint universel selon l'une quelconque des revendications 1 à 6, **caractérisé en ce que** celui-ci est perméable à l'air au moins dans des régions partielles.

8. Soufflet pour joint universel selon l'une quelconque des revendications 1 à 7, **caractérisé en ce qu'**un col périphérique (4) est formé dans la région de plus grand diamètre du soufflet pour joint universel, et recouvre au moins en partie la région axiale du pli (5).
